# EUROPEAN PATENT APPLICATION

(11) **EP 4 541 450 A1**
(43) Date of publication of application: **23.04.2025**
(21) Application number: 23823717.6
(22) Date of filing: 02.06.2023
(51) Int. Cl.: B01D 53/18, B01D 53/62, B01D 53/78, C01B 32/50, F24F 8/133

(54) **GAS RECOVERY METHOD AND GAS RECOVERY SYSTEM**

(30) Priority: 16.06.2022 JP 2022097000
(71) Applicant: CANON KABUSHIKI KAISHA, Tokyo 146-8501 (JP)
(72) Inventor: AOTANI, Takaharu, Tokyo 146-8501 (JP); SAKAKIBARA, Teigo, Tokyo 146-8501 (JP); SUZUKI, Norihiro, Tokyo 146-8501 (JP)
(74) Representative: Canon Europe Limited
(86) International application number: PCT/JP2023/020568
(87) International publication number: WO 2023/243424

(57) **Abstract**

The present invention is directed to providing a gas collection method and a gas collection system for collecting predetermined gas with small energy. A gas collection method includes converting first liquid into mist, spraying the mist, bringing, as first contact, the sprayed mist into contact with gas in the atmosphere, bringing, as second contact, liquid droplets of second liquid into contact with mist generated through the first contact, and a collecting liquid droplets that have been generated through the second contact and contain the predetermined gas.

## Description

### Technical Field

The present invention relates to a gas collection method and a gas collection system for collection of predetermined gas from atmosphere.

### Background Art

An important issue in the world is reduction of carbon dioxide that is one of factors of global warming. The carbon dioxide is mostly discharged from thermal power generation that uses oil, coal, and the like as an energy source. A direct air capture (DAC) technique has been developed to reduce the amount of carbon dioxide in the atmosphere by directly recovering carbon dioxide discharged so far from the atmosphere and storing the collected carbon dioxide.

Patent Literature (PTL) 1 discusses, as a method of collecting NOx contained in exhaust gas, a technique for immobilizing NOx by atomizing alkali aqueous solution, mixing the mist of alkali aqueous solution with the exhaust gas, and collecting and immobilizing NOx through acid-base reaction by a collection machine or the like.

### Citation List

### Patent Literature

PTL 1: Japanese Patent Laid-Open No. 2021-23900

### Summary of Invention

### Technical Problem

In the technique discussed in Patent Literature 1, however, a large-scale mechanism involving, for example, an atomization process, an oxidation process, a mixing process using a static mixer, and a collection device to collect mist generated by the mixing step and energy are necessary for purification of the exhaust gas.

The present invention is directed to providing a gas collection method, a gas collection system and a gas collection apparatus for collecting predetermined gas with small energy.

### Solution to Problem

The present inventors have conducted intensive studies to achieve the above object, and as a result, have found that the above object can be achieved with the configuration of a gas collection method of collecting predetermined gas from atmosphere, the gas collection method includes converting first liquid into mist, spraying the mist, bringing, as first contact, the sprayed mist into contact with gas in the atmosphere, bringing, as second contact, liquid droplets of second liquid into contact with mist generated through the first contact, and a collecting liquid droplets that have been generated through the second contact and contain the predetermined gas, and have completed the present invention.

### Brief Description of Drawings

[Fig. 1] Fig. 1 is a functional configuration diagram illustrating a gas collection system according to the present invention.
[Fig. 2] Fig. 2 is a diagram illustrating a gas collection procedure according to the present invention.
[Fig. 3] Fig. 3 is a diagram illustrating a gas collection method according to the present invention.
[Fig. 4A] Fig. 4A is a diagram illustrating an outline of the gas collection method according to the present invention.
[Fig. 4B] Fig. 4B is a diagram illustrating the outline of the gas collection method according to the present invention.
[Fig. 4C] Fig. 4C is a diagram illustrating the outline of the gas collection method according to the present invention.
[Fig. 5A] Fig. 5A is a schematic diagram illustrating gas collection by mist.
[Fig. 5B] Fig. 5B is a schematic diagram illustrating gas collection by mist.
[Fig. 6] Fig. 6 is a schematic diagram illustrating gas collection in a closed space.
[Fig. 7A] Fig. 7A is a diagram illustrating an example of a gas collection method.
[Fig. 7B] Fig. 7B is a diagram illustrating an example of the gas collection method.
[Fig. 7C] Fig. 7C is a diagram illustrating an example of the gas collection method. Description of Embodiments

The present invention will be described in detail below with reference to a desirable exemplary embodiment.

The present invention is not limited to the following exemplary embodiment, and modifications, improvements, and the like appropriately added to the following exemplary embodiment based on the ordinary knowledge of those skilled in the art without departing from the spirit of the present invention are also included in the scope of the present invention.

### <First Exemplary Embodiment>

A gas collection system according to the present invention is a collection system for collecting predetermined gas, converts first liquid into mist, sprays the converted mist, brings the sprayed mist into contact with the gas, further brings liquid droplets of second liquid into contact with the mist, and collects liquid droplets that have been generated through the contact and contain the predetermined gas, whereby the predetermined gas is collected. As described below with reference to drawings, the system configuration may be implemented as a gas collection apparatus including one or more apparatuses.

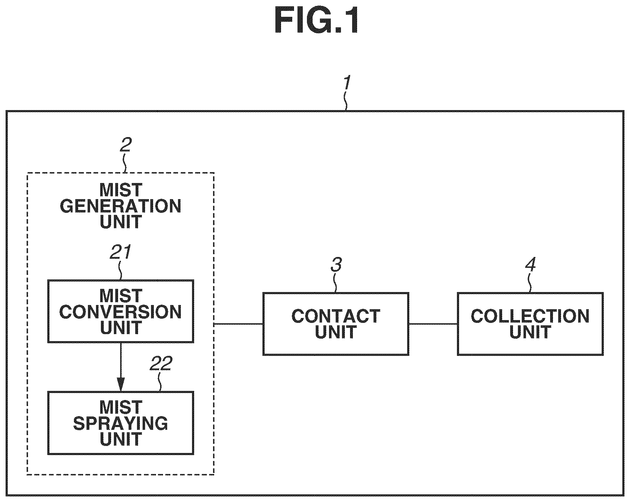

Fig. 1 is a functional configuration diagram of a gas collection system 1 according to the present invention. The gas collection system includes a mist generation unit 2 for generating mist from first liquid, a contact unit 3 for bringing liquid droplets of second liquid into contact with mist obtained through first contact processing between the generated mist and predetermined gas, and a collection unit 4 for collecting liquid droplets that has been generated through second contact and contain the predetermined gas. The mist generation unit 2 includes a mist conversion unit 21 converting the first liquid into mist, and a mist spraying unit 22 spraying the converted mist. The mist conversion unit 21 and the mist spraying unit 22 of the mist generation unit 2 may be configured as an integrated device.

The mist generation unit 2 generates mist from the first liquid. More specifically, as a mechanism for conversion of the liquid into mist, an ultrasonic irradiation unit is used. The mist generation unit 2 generates fine liquid droplets by ultrasonic vibration generated using the ultrasonic irradiation unit serving as an atomization mechanism. The ultrasonic irradiation unit is made of, for example, a piezoelectric material.

The piezoelectric material is broadly used for applications, for example, an actuator, an ultrasonic vibrator, a micro-power supply, and a high voltage generation apparatus. Most of piezoelectric bodies in these devices are materials that are so-called PZT, and are oxides containing lead (Pb), zirconium (Zr), and titanium (Ti). From environmental reasons, a lead-free piezoelectric material has been developed. Examples of the lead-free piezoelectric material include a Ba-based perovskite oxide represented by a general formula of BaM'O3. In this general formula, M' indicates a single element or a mixed crystal containing two or more elements at a certain composition ratio, and satisfies that charges of the general formula of BaM'O3 is neutral. Examples of the piezoelectric material represented by BaM'O3 include BaTiO3 that has a tetragonal structure at around a room temperature. As the ultrasonic irradiation unit, a commercially-available unit is usable. Examples of the ultrasonic irradiation unit include an immersion ultrasonic atomizing unit IM1-24 manufactured by SEIKO GIKEN INC., and a cordless aromatic diffuser MJ-CAD1 44486320 that is manufactured by Ryohin Keikaku Co., Ltd. and marketed as a humidifier, but this is not limitative. A nebulizer is also a desirable example of an ultrasonic atomizing generator as a commercial product. A form in which the first liquid and a liquid phase provided with a piezoelectric atomizing unit irradiating ultrasonic waves are separated to indirectly perform atomization is also desirable. The liquid phase provided with the atomizing unit irradiating ultrasonic waves is not particularly limited, but QUAVA mini manufactured by Kaijo Corporation is desirable. A frequency of the vibrator is not particularly limited, but 1.6 MHz is desirable. As an example for improving acid resistance, alkali resistance, solvent resistance, and corrosion resistance, a form in which a wetted member of the piezoelectric element is coated with a fluorine resin, a titanium member, or a glass member, such as quartz, is also desirable. The mist generation unit 2 is not limited to the above-described mechanism as long as the mist generation unit 2 generates mist from liquid.

The contact unit 3 brings the liquid droplets of the second liquid into contact with mist that has been generated by the mist generation unit 2 and has been brought into contact with gas in the atmosphere. Although details are described below, the second liquid brought into contact with the mist by the contact unit 3 is characterized by being larger than the mist of the first liquid. As a method of bringing the second liquid into contact with the mist to collect the first liquid droplets in which the predetermined gas is dissolved, the contact unit 3 sprays the liquid from an upper part of a space. A water spray nozzle, a showerhead, or the like may be used. To reduce a usage of the second liquid, a water spray nozzle having a small nozzle is desirable, and an inkjet head or the like may be used.

The collection unit 4 collects the liquid droplets that have been generated through contact by the contact unit 3 and contain the predetermined gas.

With such a configuration, the gas collection system 1 collects the predetermined gas with small energy. An installation destination and an application destination of the gas collection system 1 are not particularly limited as long as gas that dissolvable in liquid is present. In a case where the gas collection system 1 is applied to the atmosphere, carbon dioxide is collected by the gas collection system 1. Application of the gas collection system 1 to a thermal power plant or the like realizes particularly efficient collection of carbon dioxide. Installation of the gas collection system 1 in a space where exhaust gas stagnates, such as an inside of a tunnel, realizes collection of NOx.

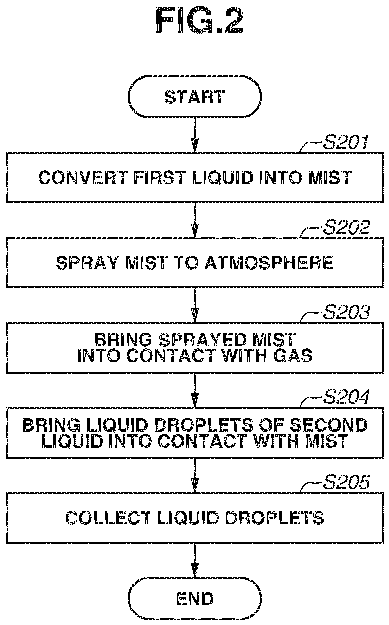

A procedure of a gas collection method performed by the gas collection system according to the present invention is described below with reference to Fig. 2.

### (Step S201)

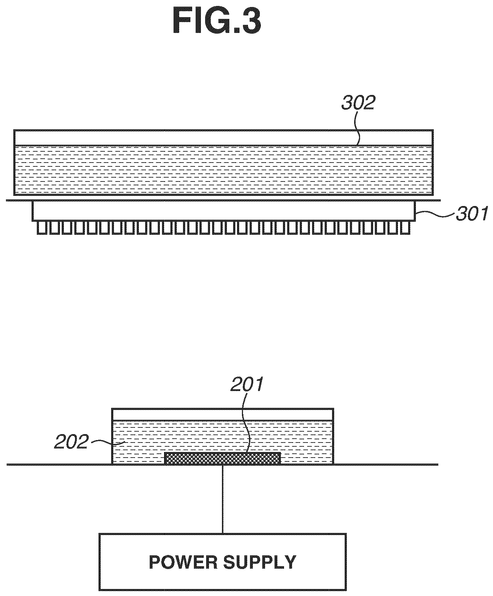

In step S201, the mist conversion unit 21 converts the first liquid into mist. In this process, the mist conversion unit 21 converts the first liquid into mist by using, for example, a vibrator for irradiation with ultrasonic waves. As described with reference to Fig. 3, the mist conversion unit 21 may convert the first liquid into mist by transmitting vibration by an ultrasonic vibrator 201 to the first liquid. Fig. 3 illustrates the ultrasonic vibrator 201 as the mist conversion unit 21 and first liquid 202. In the subsequent procedure, when a device 301 as the contact unit 3 for bringing the second liquid into contact and second liquid 302 are brought into contact with each other, the liquid droplets in which the predetermined gas is dissolved is collected.

The mist conversion unit 21 may convert the first liquid into mist by using a public intelligence method, such as a method of ejecting fine liquid droplets to be converted into mist. A size of the mist converted in this process is preferably about 10 µm or less. Generating the mist having the size of 10 µm or less by the mist conversion unit 21 results in that the mist of the first liquid remains like cloud in the atmosphere of the space for a certain period, depending on environmental humidity. After the processing by the mist conversion unit 21 ends, the processing proceeds to next step.

### (Step S202)

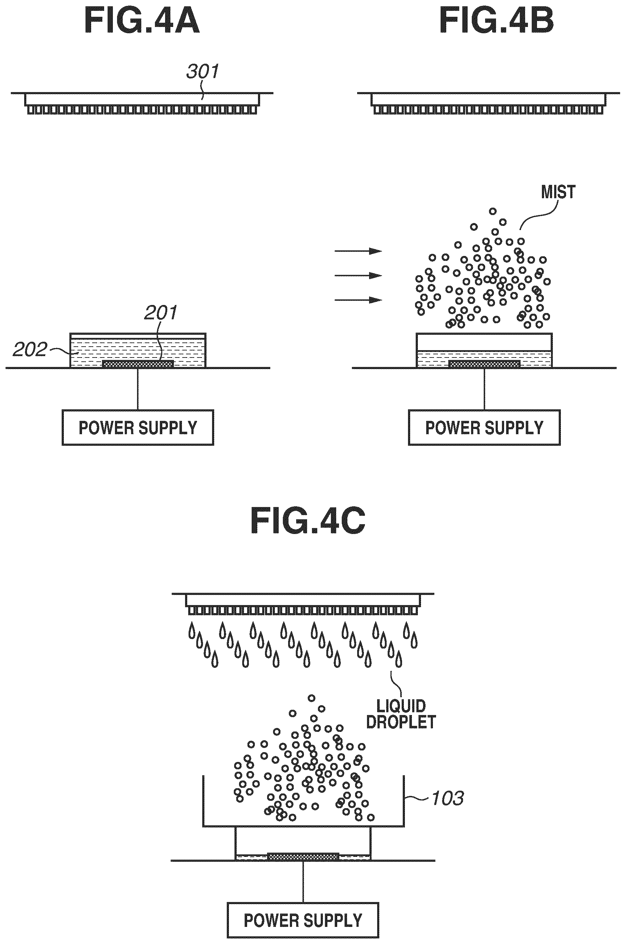

In step S202, the mist spraying unit 22 sprays the mist converted by the mist conversion unit 21 to the atmosphere. The processing in step S201 and the processing in step S202 may be performed as integrated processing. The mist spraying unit 22 may spray the mist to the atmosphere by, for example, blowing air. Alternatively, in the mist conversion processing, the mist itself may have a certain speed and be sprayed. A spraying destination of the mist spraying unit 22 can be appropriately set to, for example, a gas flow path including a partition wall and an opening, a closed space, and the atmosphere. Examples of the gas flow path include a tunnel. Fig. 4A and Fig. 4B conceptually illustrate a procedure from generation to spraying of the mist.

After the mist spraying unit 22 sprays the mist, the processing proceeds to next processing.

### (Step S203)

In step S203, the gas collection system 1 brings the sprayed mist into contact with the gas. The gas collection system 1 provides a predetermined time interval from spraying of the mist by the mist spraying unit 32 to collection, whereby the mist is brought into contact with the gas. The gas collection system 1 causes the mist to remain in the atmosphere. This leads to collection of the predetermined gas in consideration of variation in diameter of the mist and a time when the predetermined gas is dissolved in the mist. In a case where an amount of predetermined gas is not enough to achieve solubility, the gas collection system 1 may send atmospheric air to promote dissolving of the predetermined gas up to the solubility. After the first contact processing by the gas collection system 1 ends, the processing proceed to next processing.

### (Step S204)

In step S204, the contact unit 3 brings liquid droplets of the second liquid into contact with the mist generated through the first contact processing. In other words, the contact unit 3 performs second contact processing after a predetermined time is elapsed.

Fig. 4C is a conceptual diagram illustrating a state where the contact unit 3 brings the liquid droplets of the second liquid into contact with the mist generated through the first contact processing. By the contact processing of bringing the liquid droplets of the second liquid into contact with the mist, the contact unit 3 performs aggregation of the mist to terminate the retention of the mist in the atmosphere. The liquid droplets indicate drops of liquid that includes drops each having a small diameter, such as small drops.

Thereafter, the aggregated mist naturally falls, and the liquid in which the predetermined gas is dissolved is collected.

### (Step S205)

The collection unit 4 collects the liquid droplets that have been generated through the second contact processing by the contact unit 3 and contain the predetermined gas.

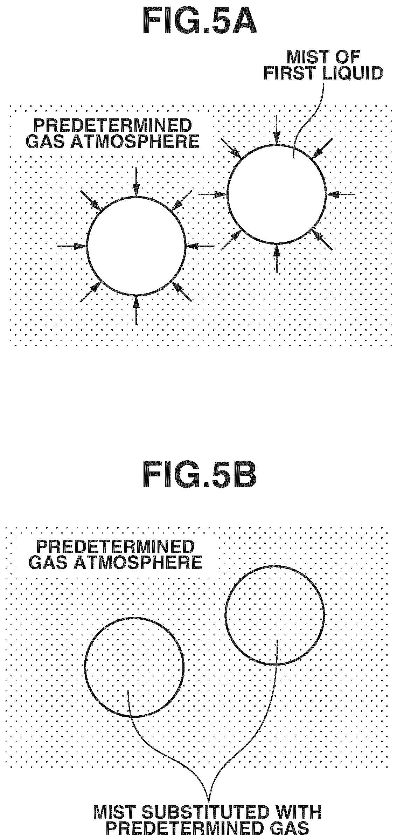

Collection of the liquid droplets containing the predetermined gas by the collection unit 4 is described with reference to Figs. 5A and 5B.

Fig. 5A illustrates a state where the mist of the liquid is flied and sprayed into predetermined gas atmosphere through the processing of steps S201 to S203. The liquid droplets thus flied and sprayed have small sizes. Therefore, an area of a gas-liquid interface per volume is large, and entire gas components are efficiently substituted/replaced to achieve equilibrium concentration while being suspended in a space after being flied and sprayed, and the liquid droplets in which the predetermined gas is dissolved as illustrated in Fig. 5B are generated. In particular, in a case of gas having high solubility in liquid, the gas is selectively dissolved, and predetermined gas-dissolved solution having high concentration is prepared. For example, carbon dioxide has solubility (relative to 1 cm³ of water) of 0.88 cm³ at a temperature of 20°C. On the other hand, nitrogen has solubility of 0.016 cm³, and oxygen has solubility of 0.031 cm³. Thus, the solubility of carbon dioxide is greater by 10 times or more than the solubility of nitrogen and oxygen. Therefore, carbon dioxide is more easily dissolved in the liquid droplets flied and sprayed, and flying and spraying water to the atmosphere makes it possible to collect carbon dioxide in the atmosphere. Likewise, in a space where NOx concentration is high like an inside of a tunnel, NOx can be collected by using solubility of NOx in liquid. The collection unit 4 collects the liquid droplets containing the predetermined gas as described with reference to Fig. 5B.

### (Liquid)

The first liquid that is used by the mist generation unit 2, and the second liquid that is used by the contact unit 3 in the gas collection system 1 are described. The first liquid and the second liquid may be the same as or different from each other.

The first liquid used by the mist generation unit 2 is, for example, water. Using water as the first liquid by the mist generation unit 2 contributes to dissolution considering ease of extraction easiness of the predetermined gas as compared with collection using strong binding, such as acid-base reaction.

For example, water having high purity (ultrapure water) purified by reaction, tap water, and hard water are candidates of the first liquid used by the mist generation unit 2. The first liquid used by the mist generation unit 2 may contain solute dissolved in such water (electrolyte formed by dissociation of sodium chloride, silver nitrate, etc., free available chlorine, amino acid, sugar, buffer, dye, etc.), dispersion (pigment, dispersant, cell, air bubble, emulsion, titanium oxide, emulsifier, etc.), and the like. The mist generation unit 2 may use mixed liquid of water and organic liquid as the first liquid. A water-soluble organic solvent used by the mist generation unit 2 is not particularly limited, but specific examples of the water-soluble organic solvent include the followings. Alkyl alcohols having a carbon number of 1 to 4, such as methyl alcohol, ethyl alcohol, n-propyl alcohol, isopropyl alcohol, n-butyl alcohol, sec-butyl alcohol, and tert-butyl alcohol. Amides, such as N-methyl-2-pyrrolidone, 2-pyrrolidone, 1,3-dimethyl-2-imidazolidinone, N,N-dimethylformamide, and N,N-dimethylacetamide.

Ketones or ketoalcohols, such as acetone and diacetone alcohol. Cyclic ethers, such as tetrahydrofuran and dioxane. Glycols, such as ethylene glycol, 1,2-propylene glycol, 1,3-propylene glycol, 1,2-butanediol, 1,3-butanediol, 1,4-butanediol, 1,5-pentanediol, 1,2-hexanediol, 1,6-hexanediol, 3-methyl-1,5-pentanediol, diethylene glycol, triethylene glycol, and thiodiglycol. Lower alkyl ethers of polyhydric alcohols, such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether. Polyalkylene glycols, such as polyethylene glycol and polypropylene glycol. Triols, such as glycerin, 1,2,6-hexanetriol, and trimethylolpropane. These water-soluble organic solvents may be used individually, or two or more types thereof may be used together. As the liquid of the gas solution, it is also possible to use liquid derived from living body, such as blood and spinal fluid.

Next, the second liquid that is used by the contact unit 3 is described. The contact unit 3 uses water as the second liquid. Using water as the second liquid by the contact unit 3 contributes to collection of the predetermined gas considering influence on a system. For example, water having high purity (ultrapure water) purified by reaction, tap water, and hard water are candidates of the second liquid used by the contact unit 3. The second liquid that is used by the contact unit 3 may contain solute dissolved in such water (electrolyte formed by dissociation of sodium chloride, silver nitrate, etc., free available chlorine, amino acid, sugar, buffer, dye, etc.), dispersion (pigment, dispersant, cell, air bubble, emulsion, titanium oxide, emulsifier, etc.), and the like. The contact unit 3 may use mixed liquid of water and organic liquid as the second liquid. A water-soluble organic solvent that is used by the contact unit 3 is not particularly limited, but specific examples of the water-soluble organic solvent include the followings. Alkyl alcohols having a carbon number of 1 to 4, such as methyl alcohol, ethyl alcohol, n-propyl alcohol, isopropyl alcohol, n-butyl alcohol, sec-butyl alcohol, and tert-butyl alcohol. Amides, such as N-methyl-2-pyrrolidone, 2-pyrrolidone, 1,3-dimethyl-2-imidazolidinone, N,N-dimethylformamide, and N,N-dimethylacetamide. Ketones or ketoalcohols, such as acetone and diacetone alcohol.

Cyclic ethers, such as tetrahydrofuran and dioxane. Glycols, such as ethylene glycol, 1,2-propylene glycol, 1,3-propylene glycol, 1,2-butanediol, 1,3-butanediol, 1,4-butanediol, 1,5-pentanediol, 1,2-hexanediol, 1,6-hexanediol, 3-methyl-1,5-pentanediol, diethylene glycol, triethylene glycol, and thiodiglycol. Lower alkyl ethers of polyhydric alcohol, such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether. Polyalkylene glycols, such as polyethylene glycol and polypropylene glycol. Triols, such as glycerin, 1,2,6-hexanetriol, and trimethylolpropane. These water-soluble organic solvents may be used individually, or two or more types thereof may be used together. As the liquid of the gas solution, it is also possible to use liquid derived from living body, such as blood and spinal fluid. Since the second liquid that is used by the contact unit 3 is used to collect the gas dissolved in the first liquid, the second liquid may not be water but oils and fats, or the like. In a case where the contact unit 3 uses oils and fats, or the like as the second liquid, only the first liquid can be easily separated after collection.

### Examples

In the following, the exemplary embodiment of the present invention is described with reference to drawings. The present invention is not limited by the following examples without departing from the gist thereof.

### First Example

As the mist conversion unit 21 and the mist spraying unit 22 of the mist generation unit 2, the piezoelectric element 201 was used to generate mist as illustrated in Fig. 4A, more specifically, a piezoelectric atomizing element (1.6 MHz) manufactured by SEIKO GIKEN INC. was used. The piezoelectric element 201 was placed in a beaker with 1 liter capacity, and 500 mL of ultrapure water was poured into the beaker.

An illustrated device was turned on to generate mist. A particle shape of the mist was 10 µm. After the mist was generated until the ultrapure water was consumed, a collection container 103 as the collection unit 4 was placed on a 101, and was left for ten minutes. After ten minutes, ultrapure water was brought into contact with the mist by a mist shower that was a device 102 for bringing the second liquid into contact with the mist, and resultant liquid was collected by the collection container 103. A particle diameter of the ultrapure water brought into contact with the mist was 50 µm.

### Second Example

With the configuration same as the configuration described in the first example, as the contact unit 3, an inkjet head was used as the device 301 bringing the second liquid into contact with the mist. A particle diameter of the second liquid was 30 µm.

### Third Example

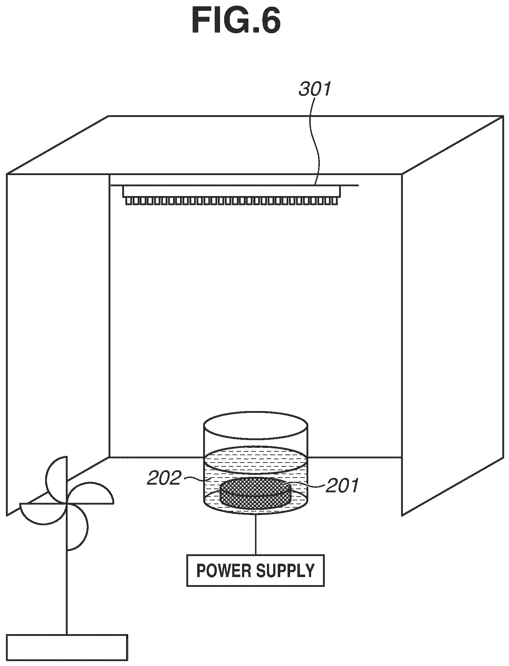

As illustrated in Fig. 6, a closed space that included one or more openings communicating with an atmospheric space was formed, the device used in the first example was placed in the closed space, the method illustrated in Fig. 2 was applied, and the mist generation device by the piezoelectric element 201 was used to generate mist. During the period, the atmospheric air was sent from the atmospheric space, and was brought into contact with the mist. After five minutes, ultrapure water was brought into contact with the mist after some degrees by the mist shower that was the device 102 for bringing the second liquid into contact with the mist, and resultant liquid was collected by the collection container 103.

### Fourth Example

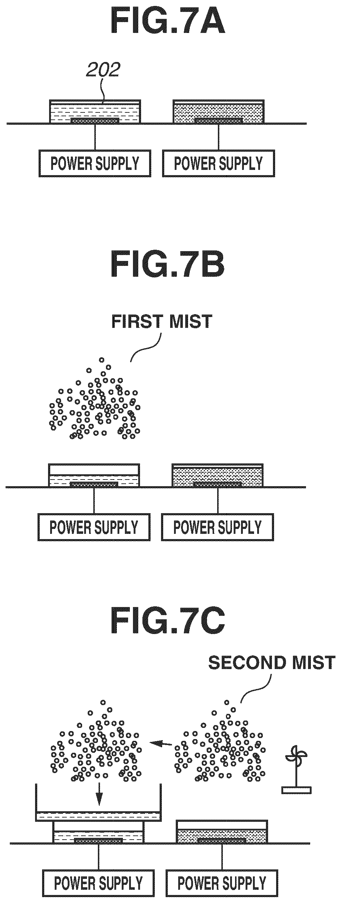

As illustrated in Figs. 7A to 7C, the piezoelectric element was used to generate mist as in the first example, more specifically, a piezoelectric atomizing element (1.6 MHz) manufactured by SEIKO GIKEN INC. was used. The piezoelectric element was placed in a beaker with 1 liter capacity, and 500 mL of ultrapure water was poured into the beaker. An illustrated device was turned on to generate mist. After ten minutes, mist of the second liquid was generated by the atomizing device in a manner similar to generation of mist of the first liquid. At the same time, the collection container 103 was placed on the power generation element 101. Thereafter, air was sent to bring first mist and second mist into contact with each other, and resultant liquid was collected by the collection container 103.

### First Comparative Example

By the method illustrated in Figs. 4A to 4C, 1 liter of ultrapure water was applied from the device for bringing the second liquid into contact with mist, and resultant liquid was collected by the collection container 103.

When pH of the water collected in the first to fourth examples was measured by pH test paper, pH was 5 to 6. The original ultrapure water had pH of 7. Therefore, it was considered that carbon dioxide in the air was dissolved and pH was lowered. The collected liquid in the first comparative example had pH of 7. In other words, pH of the liquid droplets acquired through the collection processing was lowered as compared with pH of the second liquid before contact with the mist.

It is found from the above-described examples that it is necessary to cause the sufficiently small mist to remain in the space, to collect carbon dioxide in the air.

The present invention is not limited to the above exemplary embodiment, and various modifications and variations can be made without departing from the spirit and scope of the present invention. The following claims are appended to disclose the scope of the present invention.

This application claims the benefit of Japanese Patent Applications No. 2022-097000, filed June 16, 2022 which is hereby incorporated by reference herein in their entirety.

## Claims

1. A gas collection method of collecting predetermined gas from atmosphere, the gas collection method comprising:
converting first liquid into mist;
spraying the mist;
bringing, as first contact, the sprayed mist into contact with gas in the atmosphere;
bringing, as second contact, liquid droplets of second liquid into contact with mist generated through the first contact; and
a collecting liquid droplets that have been generated through the second contact and contain the predetermined gas.

2. The gas collection method according to Claim 1, wherein, in the spraying, the mist is sprayed to a gas flow path including a partition wall and an opening.

3. The gas collection method according to Claim 1 or 2, wherein the liquid droplets of the second liquid are larger than the mist of the first liquid.

4. The gas collection method according to Claim 1 or 2, wherein the mist is 10 µm or less.

5. The gas collection method according to Claim 1 or 2, wherein the mist is generated by ultrasonic vibration.

6. The gas collection method according to Claim 1 or 2, wherein the gas collection method is performed in the atmosphere.

7. The gas collection method according to Claim 1 or 2, wherein the predetermined gas is gas containing carbon dioxide.

8. The gas collection method according to Claim 1 or 2, wherein the first liquid is liquid containing water.

9. The gas collection method according to Claim 1 or 2, wherein the second liquid is liquid containing water.

10. The gas collection method according to Claim 1 or 2, wherein the second contact is performed after a predetermined time is elapsed from spraying of the mist.

11. The gas collection method according to Claim 1 or 2, wherein pH of the liquid droplets generated through the collecting is lower than pH of the second liquid that is before contact with the mist.

12. A gas collection system, comprising:
a mist conversion unit configured to convert first liquid into mist;
a mist spraying unit configured to spray the mist;
a contact unit configured to bring liquid droplets of second liquid into contact with mist generated through contact of the sprayed mist and predetermined gas; and
a collection unit configured to collect liquid droplets that have been generated through contact and contain the predetermined gas.
